# EUROPEAN PATENT APPLICATION

(11) **EP 2 461 510 A1**
(43) Date of publication of application: **06.06.2012**
(21) Application number: 10811153.5
(22) Date of filing: 12.05.2010
(51) Int. Cl.: H04L 1/00, H04L 12/56, H04Q 3/00

(54) **METHOD AND NETWORK NODE FOR MESSAGE TRANSFER**

(30) Priority: 28.08.2009 CN 200910168103
(71) Applicant: ZTE Corporation, Shenzhen, Guangdong 518057 (CN)
(72) Inventor: XIANG, Xiaoshan, Shenzhen Guangdong 518057 (CN)
(74) Representative: Jansen, Cornelis Marinus
(86) International application number: PCT/CN2010/072679
(87) International publication number: WO 2011/022993

(57) **Abstract**

The present disclosure provides a method, a system and a network node for message transfer. The method comprises: a sending node sends a message whose message header carries transfer type information and unique identifier information in a way of copy from all output interfaces of the sending node to a destination node (101); and the destination node analyzes the message header of the received message, determines whether the message is received for a first time after the message is determined as a message sent in the way of copy according to the transfer type information, and records the unique identifier information of the message if the message is received for the first time (102). The solution improves the transfer reliability and promptness of messages, especially those important signaling messages, by sending copies of the signaling message from multiple output interfaces.

## Description

### Technical field

The present disclosure relates to the technical field of communication network, in particular to a method and a network node for message transfer.

### Background

In a communication network, reliable transfer and correct processing of signaling messages are premise to guarantee normal operating of the communication network. If transfer of signaling messages is unreliable and message packets are lost, abnormity of relative network operations may be caused. For example, the Optical Supervisory Channel (OSC) is generally employed in a Wavelength-Division Multiplexing (WDM) system as the control signaling channel, and generally, OSC wavelength and service wavelength are multiplexed together into an optical fiber for transfer. Therefore, if the optical fiber breaks down, for example break of fiber, not only services will be interrupted, but also the signaling channel, namely, OSC, will break down too, further the transfer of signaling messages may be failed.

At present, the reliability can be improved by a confirmation and timeout retransmission mechanism.

### Summary

One defect of the timeout retransmission mechanism is that: if packets are lost, the important signaling messages can not be sent to the destination node as soon as possible, thus time delay may be caused and failure may also be caused due to not arrival of signaling in time. Therefore, in order to guarantee reliable transfer and correct processing of important signaling messages, a prompt and reliable method and a network node for message transfer are required, to improve the transfer reliability and promptness of messages, especially signaling messages.

The technical problem to be solved by the present disclosure is that a method and a network node for message transfer are provided, to improve the transfer reliability and promptness of messages in the communication network, especially some important signaling messages.

In order to solve the problem, the present disclosure provides a method for signaling message transfer, comprising:
sending, by a sending node, a message whose message header carries transfer type information and unique identifier information in a way of copy from all output interfaces of the sending node to a destination node; and
analyzing, by the destination node, the message header of the received message, determining whether the message is received for a first time after the message is determined as a message sent in the way of copy according to the transfer type information, and recording the unique identifier information of the message if the message is received for the first time.

The method may further comprise:
after the step of determining whether the message is received for the first time, if the message is not received for the first time, the message with same unique identifier information as a message received for the first time is abandoned.

The message may be a signaling message or data message.

The method may further comprise:
after the step of sending the message added with the message header to the destination node in the way of copy from all output interfaces of the sending node,
forwarding, by each intermediate node in each path between the sending node and the destination node, the message that is received from a preceding hop node to a next hop node.

The unique identifier information may include message identifier-num, message identifier-snd node and message identifier-time stamp; the unique identifier information may be used for uniquely identifying the message sent by the sending node at a current network time.

The step that the destination node analyzes the message header of the received message may comprise:
determining, by the destination node, whether a time interval between the message identifier-time stamp and a current network time of the destination node is within a specified time interval, if so, determining a type of the message, if not, abandoning the message.
In the step of recording the unique identifier information of the message which is received for the first time, a global data structure may be employed to record the unique identifier information; and
the step of determining whether the message is received for the first time may comprise:
   searching, by the destination node, in the global data structure to determine whether the unique identifier information of the message is recoded; if the unique identifier information is not found, determining that the message is received for the first time; if the unique identifier information is found, determining that the message is not received for the first time.

The destination node may determine regularly an aging degree of each entry for recording unique identifier information of a message in the global data structure, and may delete the entry when aging time of the entry exceeds a threshold.

In order to solve the problem, the present disclosure further provides a system for realizing signaling message transfer, comprising:
a sending node, configured to send a message whose message header carries transfer type information and unique identifier information in a way of signaling message copy from all output interfaces of the sending node to a destination node; and
the destination node, configured to analyze the message header of the received signaling message, determine whether the message is received for a first time after the message is determined as a signaling message copy according to the transfer type information, record the unique identifier information in the message header of the signaling message copy received for the first time if the message is received for the first time, and abandon subsequent signaling message copies with same unique identifier information as the message received for the first time.

In order to solve the problem, the present disclosure further provides a network node for realizing message transfer, comprising:
a sending module, configured to: when the network node serves as a sending node, add a message header that carries transfer type information and unique identifier information in a message to be sent, and send the message added with the message header to a destination node in a way of copy from all output interfaces of the sending node; and
a receiving module, configured to: when the network node serves as the destination node, analyze the message header of the received message, determine whether the message is received for a first time after the message is determined as a message sent in the way of copy according to the transfer type information, and record the unique identifier information of the message if the message is received for the first time.

The network node may further comprise: a forwarding module, wherein
the forwarding module is configured to: when the network node serves as an intermediate node, forward a signaling message from a preceding hop node to a next hop node.

The receiving module may be further configured to abandon a message with same unique identifier information as the message received for the first time.

The unique identifier information may include message identifier-num, message identifier-snd node and message identifier-time stamp; the unique identifier information may be used for uniquely identifying the message sent by the sending node at a current network time; and
the receiving module may be configured to analyze the message header of the received message according to the following way: the receiving module determines whether a time interval between the message identifier-time stamp and a current network time of the destination node is within a specified time interval, if so, continues to process, if not, abandons the message.

The receiving module may be configured to record the unique identifier information of the message received for the first time according to the following way: the receiving module employs a global data structure to record the unique identifier information; and
the receiving module may be configured to determine whether the message is received for the first time according to the following way: the receiving module searches in the global data structure to determine whether the unique identifier information of the message is recoded; if the unique identifier information is not found, determines that the message is received for the first time; if the unique identifier information is found, determines that the message is not received for the first time.

The receiving module may be further configured to regularly determine an aging degree of each entry for recording unique identifier information of a message in the global data structure, and delete the entry when aging time of the entry exceeds a threshold.

The method and the system for signaling message transfer in the present disclosure are **characterized in that**, when an important signaling message is transferred, after the signaling message added with a message header having a unique identifier is encapsulated, copies of the signaling message are sent from all possible signaling message output interfaces of the sending node, and then the signaling message is sent normally by each next hop node; when the copies of the signaling message arrive at the destination node, the destination node needs to distinguish whether the received message is a signaling message arriving for the first time or is a repeated copy, if the message is a signaling message received for the first time, the destination node accepts it, otherwise abandons it. The present disclosure improves the transfer reliability and promptness of some important signaling messages, by sending signaling message copies from multiple output interfaces.

### Brief description of the drawings

Fig. 1 shows a general flow chart of a method for signaling transfer according to the present disclosure;
Fig. 2 shows a message header format for encapsulating a signaling message copy to be sent according to the present disclosure;
Fig. 3 shows a diagram of a network system for realizing signaling transfer according to the present disclosure;
Fig. 4 shows a diagram of the signaling transfer process when the signaling channel works normally in a network with three nodes connected according to the embodiment of the present disclosure;
Fig. 5 shows a specific message format after the signaling message copy is encapsulated according to Embodiment 1 of the present disclosure;
Fig. 6 shows a diagram of the signaling transfer process when the signaling link between node A and node B breaks down in a network with three nodes connected according to the embodiment of the present disclosure;
Fig. 7 shows a specific message format after the signaling message copy is encapsulated according to Embodiment 2 of the present disclosure.

### Detailed description

In order to make the purpose, technical solution and advantages of the present disclosure more clear, the present disclosure will be further described in details below in combination with drawings.

The method and the network node for message transfer in the present disclosure are **characterized in that**, when a message is transferred, a message header with a unique identifier is added in the message, the message added with the message header is sent to a destination node from all possible signaling message output interfaces of a sending node; that is, 101: a sending node sends a message whose message header carries transfer type information and unique identifier information in a way of copy from all the output interfaces of the sending node to a destination node; and
when the message added with the message header arrives at the destination node, the destination node needs to distinguish whether the received message is a signaling message arrived for a first time, if the received message is the signaling message arrived for the first time, the destination node receives it, otherwise directly abandons it or executes other processing, that is, 102: the destination node analyzes the message header of the received message, determines whether the message is received for a first time after the message is determined as a message sent in the way of copy according to the transfer type information, and records the unique identifier information of the message if the message is received for the first time.

The present disclosure improves the transfer reliability and promptness of some messages, by sending the message to the destination node from multiple output interfaces.

The message may be an important signaling message or other data message.

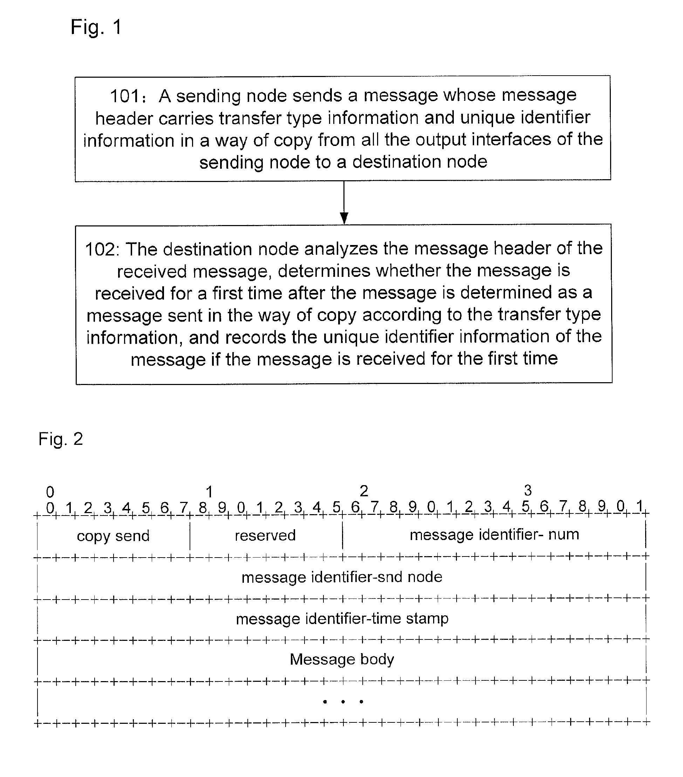

Based on above concept, Fig. 1 shows a method for signaling message transfer according to an embodiment of the present disclosure, in this embodiment, signaling message is taken as example, the processing way of other data message is similar to that of signaling message. The method comprises:
S1: A sending node adds a message header that carries transfer type information and unique identifier information in a signaling message to be sent, encapsulates the signaling message to be sent, and then sends the encapsulated signaling message to a destination node from all the output interfaces;
S2: The destination node analyzes the message header of the received signaling message, after the message is determined as a signaling message according to the transfer type information, records the unique identifier information in the message header of the signaling message received for the first time, processes the signaling message separated from the message header, and abandons later signaling message copies with same unique identifier information as the signaling message received for the first time.

Here, the operation of processing the signaling message separated from the message header specifically means that the signaling message separated from the message header is processes according to an existing processing way of a normal signaling message which is encapsulated without adding a message header, here different processing ways may be used according to different signaling messages, however, for those skilled in the art, processing of different signaling messages is common knowledge, therefore will not be described again.

Further, there always are multiple intermediate nodes in multiple paths between the sending node and the destination node, therefore, the method further comprises:

An intermediate node forwards the signaling message copy from the sending node or a preceding hop node to a next hop node or the destination node.

More specifically, in S1, the specific operation of encapsulating and sending the signaling message to be sent is as follows:
A1: When a signaling message sending node decides to send an important signaling message, firstly, it re-encapsulates the message such that a necessary message header is added to distinguish from other copies and to distinguish from other normal messages, for example, the message header format shown in Fig. 2 for encapsulating the signaling message copies to be sent may be employed.

Fig. 2 shows a message header format for encapsulating a signaling message copy to be sent, wherein "copy send" represents whether the message is sent in the way of copy, that is, it is used for identifying the type information of the message: whether the message is a normal signaling message or a signaling message sent in the way of copy; combination of "message identifier-num", "message identifier-snd node" and "message identifier-time stamp" is used for expressing a global unique number that uniquely identifies the signaling message. The "message identifier-num" expresses the number of message already sent by the sending node (for example, the messages can be respectively numbered as 1, 2, ..., and so on), the "message identifier-snd node" expresses the identifier of the first node sending the message, that is, the specific network address of the sending node, the "message identifier-time stamp" expresses the network time of the current sending at the sending node, which takes millisecond as unit. Maintenance of message identifier-time stamp will be described in details later.

Then, when the signaling message is sent, the sending node notifies a bottom forwarding module to send the signaling message that carries the copy-send message header from all possible output interfaces of the sending node. The notification may be executed by setting sending options through the sending process of the sending node, or other notification ways in the prior art may be employed. Further, as the key point of the present disclosure is that it is necessary to send one signaling message at the sending node to all the output interfaces, a transport forwarding layer can be expanded to achieve this function, an option of sending socket interface may be added to notify the bottom forwarding module (for example, IP) that it is necessary to send this signaling message to all possible output interfaces of this node when the signaling message is sent.

A2: When an intermediate node receives the signaling message, it processes the signaling message according to a normal signaling forwarding flow.

In S2, the specific operation of analyzing and processing the received signaling message is as follows:
A3: When the destination node receives the signaling message, a receiving process first analyzes the message header of the signaling message, if it finds that the message is sent in the way of copy, it processes the signaling message according to the following flow:
   A3.1: First, the receiving process compares the message identifier-time stamp recorded in the message header of the signaling message with the current network time recorded by the receiving node, if the time interval between the two is within a specified time interval Tₘₐₓ, it continues to process the message, otherwise it abandons the message;

Wherein the specified time interval Tₘₐₓ should be determined based on the following several factors: error of network time of all network elements and maximum survival time of the route grouping in the network and so on. As the message identifier-time stamp in the message header is in unit of millisecond, and it expresses a time length about 49 days, as a result, as long as the time difference between network elements is not very large, and the parameter Tₘₐₓ is set rationally, the existing network time synchronization mechanism is completely enough, the existing time synchronization means can be employed to perform synchronization.

A3.2: The receiving process searches in a global data structure g-RcvdCpySndPkt used for storing received copy-sent messages to determine whether a copy of the message is already received, if a copy of the message is found, it abandons the copy of the message currently received; otherwise, it adds an entry in the g-RcvdCpySndPkt to indicate that a copy of a copy-sent data is already received, and then processes the copy according to the processing flow of the signaling message.

The data structure g-RcvdCpySndPkt used for storing the received copy-sent messages further comprises a timed deletion flow: as the time goes by and messages are sent and received, the entries in the g-RcvdCpySndPkt will increase gradually, therefore a proper flow should be employed to delete the aged elements in the global data structure.

In order to perform aging processing, an aging time field "uiAge" is added in the entry structure of the g-RcvdCpySndPkt. Aging processing can be performed according to the following flow:
C1: An aging timer Tage that operates continuously is started, the time interval of which is Ta-interv;
C2: When an entry is added in the g-RcvdCpySndPkt, the uiAge of the entry is initialized to 0, and the content in the added entry is the unique identifier information used for uniquely identifying the copy-sent message;
C3: When the aging timer Tage is time out, the whole g-RcvdCpySndPkt structure is traversed, the aging time uiAge of each entry is added by 1, when the maximum allowable value of the uiAge is reached, the entry corresponding to the copy-sent message is deleted from the g-RcvdCpySndPkt structure.

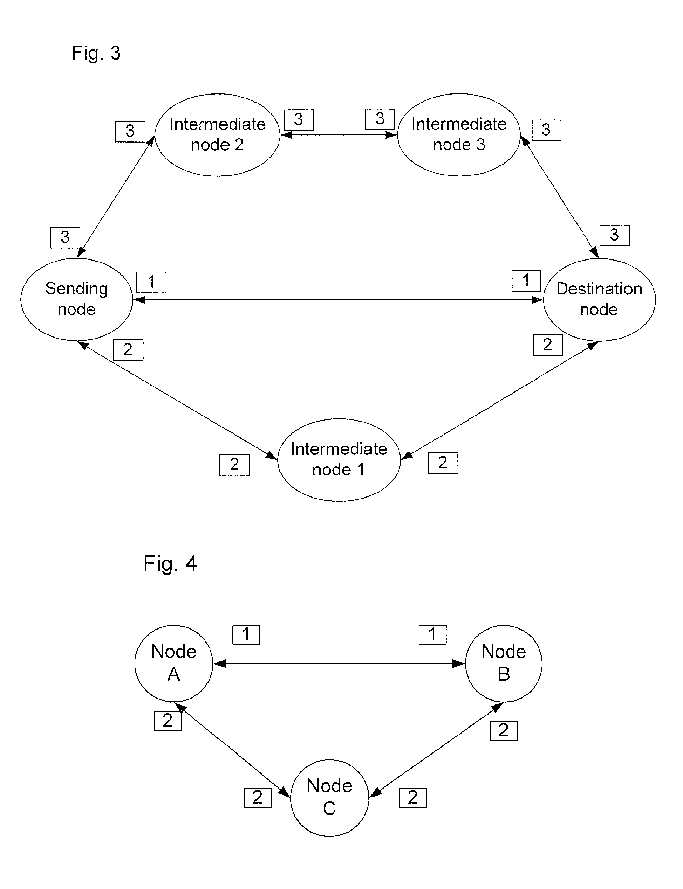

Based on the method, Fig. 3 shows a system for realizing message transfer according to the present disclosure, comprising:
a sending node, used for encapsulating a signaling message to be sent, adding a message header that carries transfer type information and unique identifier information in the signaling message to be sent, and then sending the encapsulated signaling message to a destination node from all the output interfaces;
the destination node, used for receiving the signaling message, analyzing the message header of the received signaling message, after the message is determined as a signaling message copy according to the transfer type information, recording the unique identifier information in the message header of the signaling message copy received for the first time, processing the signaling message separated from the message header, and abandoning subsequent signaling message copies with same unique identifier information as the message received for the first time; and
an intermediate node, used for, in a path between the sending node and the destination node, forwarding a signaling message copy received from the sending node or a preceding hop node to a next hop node or the destination node.

Accordingly, the present disclosure further provides a network node for realizing signaling message transfer, comprising:
a sending module, configured to: when the network node serves as a sending node, add a message header that carries transfer type information and unique identifier information in a message to be sent, and send the message added with the message header to a destination node in a way of copy from all output interfaces of the sending node; and
a receiving module, configured to: when the network node serves as the destination node, analyze the message header of the received message, determine whether the message is received for a first time after the message is determined as a message sent in the way of copy according to the transfer type information, and record the unique identifier information of the message if the message is received for the first time.

The network node further comprises a forwarding module, wherein
the forwarding module is configured to: when the network node serves as an intermediate node, forward a signaling message from a preceding hop node to a next hop node.

The receiving module is further configured to abandon a message with same unique identifier information as the message received for the first time.

The unique identifier information includes message identifier-num, message identifier-snd node and message identifier-time stamp; the unique identifier information is used for uniquely identifying the message sent by the sending node at a current network time; and
the receiving module is configured to analyze the message header of the received message according to the following way: the receiving module determines whether a time interval between the message identifier-time stamp and a current network time of the destination node is within a specified time interval, if so, continues to process, if not, abandons the message.

The receiving module is configured to record the unique identifier information of the message received for the first time according to the following way: the receiving module employs a global data structure to record the unique identifier information; and
the receiving module is configured to determine whether the message is received for the first time according to the following way: the receiving module searches in the global data structure to determine whether the unique identifier information of the message is recoded; if the unique identifier information is not found, determines that the message is received for the first time; if the unique identifier information is found, determines that the message is not received for the first time.

The receiving module is further configured to regularly determine an aging degree of each entry for recording unique identifier information of a message in the global data structure, and delete the entries when aging time of the entry exceeds a threshold.

The specific application of the method and the system for signaling message transfer will be described in details below in combination with embodiment 1 and embodiment 2.

### Embodiment 1

As shown in Fig. 4, a network system has A, B and C three nodes, the signaling channels among the three nodes employ in-band signaling, it is assumed that at a certain moment, node A wants to send an important signaling message MSG to node B, node A employs the signaling transfer method in the present disclosure to send the message according to the following steps.

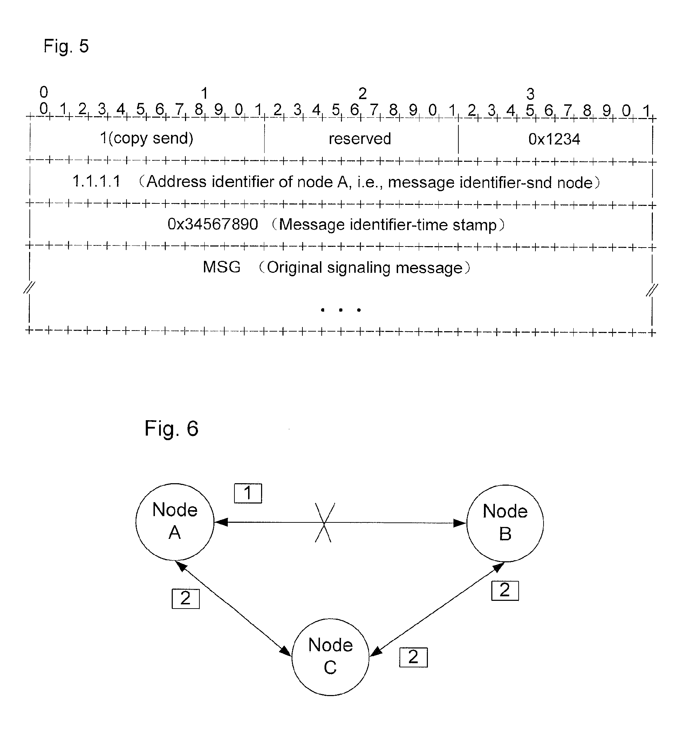

S11: A signaling sending process of node A first encapsulates the signaling message MSG to be of the message format as shown in Fig. 5,
when the "copy send" expressing the type of the message is 1, it means that the message is sent in the way of signaling copy as shown in the present disclosure, that is, the message is sent in the way of multiple copies, if the "copy send" is 0, it means that the message is sent not in the way of signaling copy; "0x1234" expresses one number of the message made by node A, the sending node adds the number by 1 when sends one signaling message; "1.1.1.1" expresses the address identifier of node A in the network, that is, the network address of node A; "0x34567890" expresses a synchronous network time in unit of millisecond; in S11, combination of three elements {message identifier-num 0x1234, message identifier-snd node 1.1.1.1, message identifier-time stamp 0x34567890} uniquely defines a message sent by node A at this moment.

S12: By setting a sending option, the signaling sending process of node A notifies the bottom transport layer to send the message from all possible signaling output interfaces of node A. As shown in Fig. 4, a copy 1 enters the signaling channel from node A to node B; a copy 2 enters the signaling channel from node A to node C, wherein node C is an intermediate node. Then, each intermediate node through which each copy of the signaling message passes forwards the copy according to normal forwarding flow. The copy 1 directly reaches the destination node B which the signaling message aims to. The copy 2 reaches node B through the forwarding of node C. The intermediate node C forwards the copy 2 according to normal forwarding flow when receiving the copy 2. Finally, copy 1 and copy 2 reach the destination node B in sequence.

It is assumed that copy 1 reaches the destination node B earlier than copy 2, then the bottom forwarding protocol of node B forwards the received message to a signaling receiving process of node B, the receiving process first analyzes the message header of the signaling, determines whether the field "copy send" is 1, if so, processes the message according to the following steps; otherwise, removes the message header of the message and then submits it to the signaling processing flow to process the signaling message MSG.

S21: First, The receiving process compares the time stamp recorded in the message header with the current network time of the node, if the time difference exceeds the specified maximum time range Tₘₐₓ (generally, this time is n (1, 2, 3, ...) times as long as the longest transfer time of signaling message in the network, for example, this time may be 30min), it means that the message is a message which is lost in the network, and the message is abandoned directly; otherwise continues to process according to the following S22. Here, it is assumed that the time difference is within the range of Tₘₐₓ.

S22: The receiving process searches in the global data structure g-RcvdCpySndPkt used for storing received copy-sent messages to determine whether a copy of the message is already received, by taking {message identifier-num 0x1234, message identifier-snd node 1.1.1.1, message identifier-time stamp 0x34567890} as index. If a copy of the message is found, it abandons the currently received message directly; otherwise, it processes the message according to the following S23. Obviously, when copy 1 reaches node B first, the unique identifier information {message identifier-num 0x1234, message identifier-snd node 1.1.1.1, message identifier-time stamp 0x34567890} of copy 1 does not exist in the g-RcvdCpySndPkt structure. Therefore, it continues to process copy 1 according to the following S23.

S23: First, an entry is added in the g-RcvdCpySndPkt structure to identify that the signaling message whose unique identifier information is {message identifier-num 0x1234, message identifier-snd node 1.1.1.1, message identifier-time stamp 0x34567890} is already received. Then the message header is removed, the signaling message MSG is submitted to the processing flow of the signaling message for processing.

When copy 2 forwarded by the intermediate node C reaches node B, first, copy 2 is processed according to S21 and then according to S21, the receiving process searches in the g-RcvdCpySndPkt to determine whether a copy of the signaling message is already received, by taking {message identifier-num 0x1234, message identifier-snd node 1.1.1.1, message identifier-time stamp 0x34567890} as index. As a result, the unique identifier information of this message already exists in the g-RcvdCpySndPkt, which means that the destination node B already receives another copy of the signaling message. Therefore the copy 2 is abandoned directly.

### Embodiment 2

As shown in Fig. 6, a network system has A, B and C three nodes, the signaling channels among the three nodes employ in-band signaling, it is assumed that at a certain moment, node A wants to send an important signaling message MSG to node B, and the signaling channel between node A and node B breaks down, node A employs the signaling transfer method in the present disclosure to send the signaling.

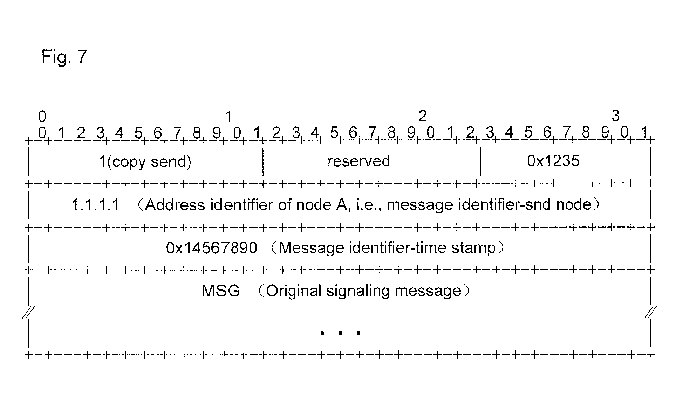

S31: The signaling sending process of node A first encapsulates the signaling message MSG to be of the message format as shown in Fig. 7,
when the "copy send" is 1, it means that the message is sent in the way of multiple copies as shown in the present disclosure, if the "copy send" is 0, it means that the message is sent not in the way of multiple copies; "0x1235" expresses one number of the message made by node A, the sending node adds the number by 1 when sends one signaling message; "1.1.1.1" expresses the address identifier of node A in the network, that is, the network address of node A; "0x14567890" expresses a synchronous network time in unit of millisecond; therefore, combination of three elements {message identifier-num 0x1235, message identifier-snd node 1.1.1.1, message identifier-time stamp 0x14567890} uniquely defines a message sent by node A at this moment.

S32: By setting a sending option, the signaling sending process of node A notifies the bottom transport layer to send the message from all possible signaling output interfaces of node A. As shown in Fig. 6, a copy 1 enters the signaling channel from node A to node B; a copy 2 enters the signaling channel from node A to node C. Then, each intermediate node through which each copy of the signaling message passes forwards the copy according to normal forwarding flow. The copy 1 is unable to reach the destination node B as the signaling channel between node A and node B breaks down; the copy 2 reaches node B through the forwarding of node C; therefore, only copy 2 reaches the destination node B.

Then, the bottom forwarding protocol of node B forwards the message to the signaling receiving process of node B, the receiving process first analyzes the message header of the signaling, finds that the field "copy send" is 1, and executes processing according to the following steps:

S41: First, The receiving process compares the time stamp (expressing the network time when the message is sent by the node A) recorded in the message header with the current network time of the node B, if the time difference exceeds the specified maximum time range Tₘₐₓ, it means that the message is a message which is lost in the network, and the message is abandoned directly; otherwise continues to process according to the following S42. Here, it is assumed that the time difference is within the range of Tₘₐₓ.

S42: The receiving process searches in the g-RcvdCpySndPkt to determine whether a copy of the message is already received, by taking {message identifier-num 0x1235, message identifier-snd node 1.1.1.1, message identifier-time stamp 0x14567890} as index. If a copy of the message is found, it abandons the currently received message directly; otherwise, it processes the message according to the following S43. Obviously, as only copy 2 reaches node B, the identifier {message identifier-num 0x1235, message identifier-snd node 1.1.1.1, message identifier-time stamp 0x14567890} of copy 2 does not exist in the g-RcvdCpySndPkt. Therefore, it continues to process copy 1 according to the following S43.

S43: First, an entry is added in the g-RcvdCpySndPkt to identify that the signaling message whose unique identifier information is {message identifier-num 0x1235, message identifier-snd node 1.1.1.1, message identifier-time stamp 0x14567890} is already received. Then the message header is removed, the signaling message MSG is submitted to the processing flow of the signaling message for processing.

In the Embodiment 2, although the normal signaling channel between node A and node B breaks down, the signaling message can also be sent to the destination node B through another signaling channel A-C-B as soon as possible.

### Embodiment 3

When the signaling receiving process of the destination node is started, an aging timer T_{age} that operates continuously according to a time interval 1s is started, then, when the timer T_{age} is time out, processing will be performed according to the following steps:

S51: It is determined whether the global data structure g-RcvdCpySndPkt used for storing received copy-sent messages is empty, if not, S52 is executed; if so, no operation is executed.

S52: Each entry of the g-RcvdCpySndPkt is traversed, and the field "uiAge" in each entry is added by 1. When the aging time uiAge is MAXAGE (for example, 1 h, that is, 3600s, the counting unit is 1s), the entry is deleted from g-RcvdCpySndPkt to prevent the entry from occupying too much memory.

It is assumed that an entry is added in the g-RcvdCpySndPkt at a certain moment, it means that the signaling message whose identifier information is {message identifier-num 0x1235, message identifier-snd node 1.1.1.1, message identifier-time stamp 0x14567890} is received. The aging time uiAge in the entry is initialized to 0.

Then, once the timer is out time, the uiAge in the entry corresponding to {message identifier-num 0x1235, message identifier-snd node 1.1.1.1, message identifier-time stamp 0x14567890} is added by 1, when the uiAge is added to 3600, the entry {message identifier-num 0x1235, message identifier-snd node 1.1.1.1, message identifier-time stamp 0x14567890} is deleted.

Above descriptions are only preferred embodiments of the present disclosure and are not intended to limit the protection scope of the present disclosure. For those skilled in the art, the present disclosure may have various modifications and changes; any modifications, equivalent replacements and improvements made within the principle of the present disclosure should be included within the protection scope of the present disclosure.

### Industrial applicability

The present disclosure improves the transfer reliability and promptness of messages, especially those important signaling messages, by sending copies of the signaling message from multiple output interfaces.

## Claims

1. A method for message transfer, comprising:
sending, by a sending node, a message whose message header carries transfer type information and unique identifier information in a way of copy from all output interfaces of the sending node to a destination node; and
analyzing, by the destination node, the message header of the received message, determining whether the message is received for a first time after the message is determined as a message sent in the way of copy according to the transfer type information, and recording the unique identifier information of the message if the message is received for the first time.

2. The method according to claim 1, further comprising:
after the step of determining whether the message is received for the first time, if the message is not received for the first time, the message with same unique identifier information as a message received for the first time is abandoned.

3. The method according to claim 1 or 2, wherein
the message is a signaling message or data message.

4. The method according to claim 1 or 2, further comprising:
after the step of sending the message added with the message header to the destination node in the way of copy from all output interfaces of the sending node,
forwarding, by each intermediate node in each path between the sending node and the destination node, the message that is received from a preceding hop node to a next hop node.

5. The method according to claim 1, wherein
the unique identifier information includes message identifier-num, message identifier-snd node and message identifier-time stamp; the unique identifier information is used for uniquely identifying the message sent by the sending node at a current network time.

6. The method according to claim 5, wherein the step that the destination node analyzes the message header of the received message comprises:
determining, by the destination node, whether a time interval between the message identifier-time stamp and a current network time of the destination node is within a specified time interval, if so, determining a type of the message, if not, abandoning the message.

7. The method according to claim 1, wherein
in the step of recording the unique identifier information of the message which is received for the first time, a global data structure is employed to record the unique identifier information; and
the step of determining whether the message is received for the first time comprises:
searching, by the destination node, in the global data structure to determine whether the unique identifier information of the message is recoded; if the unique identifier information is not found, determining that the message is received for the first time; if the unique identifier information is found, determining that the message is not received for the first time.

8. The method according to claim 7, further comprising:
determining regularly, by the destination node, an aging degree of each entry for recording unique identifier information of a message in the global data structure, and deletes the entry when aging time of the entry exceeds a threshold.

9. A system for realizing signaling message transfer, comprising:
a sending node, configured to send a message whose message header carries transfer type information and unique identifier information in a way of signaling message copy from all output interfaces of the sending node to a destination node; and
the destination node, configured to analyze the message header of the received signaling message, determine whether the message is received for a first time after the message is determined as a signaling message copy according to the transfer type information, record the unique identifier information in the message header of the signaling message copy received for the first time if the message is received for the first time, and abandon subsequent signaling message copies with same unique identifier information as the message received for the first time.

10. A network node for realizing message transfer, comprising:
a sending module, configured to: when the network node serves as a sending node, add a message header that carries transfer type information and unique identifier information in a message to be sent, and send the message added with the message header to a destination node in a way of copy from all output interfaces of the sending node; and
a receiving module, configured to: when the network node serves as the destination node, analyze the message header of the received message, determine whether the message is received for a first time after the message is determined as a message sent in the way of copy according to the transfer type information, and record the unique identifier information of the message if the message is received for the first time.

11. The network node according to claim 10, further comprising: a forwarding module, wherein
the forwarding module is configured to: when the network node serves as an intermediate node, forward a signaling message from a preceding hop node to a next hop node.

12. The network node according to claim 10 or 11, wherein
the receiving module is further configured to abandon a message with same unique identifier information as the message received for the first time.

13. The network node according to claim 12, wherein the unique identifier information includes message identifier-num, message identifier-snd node and message identifier-time stamp; the unique identifier information is used for uniquely identifying the message sent by the sending node at a current network time; and
the receiving module is configured to analyze the message header of the received message according to the following way: the receiving module determines whether a time interval between the message identifier-time stamp and a current network time of the destination node is within a specified time interval, if so, continues to process, if not, abandons the message.

14. The network node according to claim 10 or 11, wherein
the receiving module is configured to record the unique identifier information of the message received for the first time according to the following way: the receiving module employs a global data structure to record the unique identifier information; and
the receiving module is configured to determine whether the message is received for the first time according to the following way: the receiving module searches in the global data structure to determine whether the unique identifier information of the message is recoded; if the unique identifier information is not found, determines that the message is received for the first time; if the unique identifier information is found, determines that the message is not received for the first time.

15. The network node according to claim 14, wherein
the receiving module is further configured to regularly determine an aging degree of each entry for recording unique identifier information of a message in the global data structure, and delete the entry when aging time of the entry exceeds a threshold.
